Europäisches Patentamt

European Patent Office

Office européen des brevets

(11) Publication number: **0 153 053 B1**

# EUROPEAN PATENT SPECIFICATION

(45) Date of publication of patent specification: **09.09.92**   (51) Int. Cl.⁵: **H04N 3/12**

(21) Application number: **85300641.9**

(22) Date of filing: **30.01.85**

(54) **Video display apparatus.**

(30) Priority: **02.02.84 JP 19035/84**

(43) Date of publication of application:
**28.08.85 Bulletin 85/35**

(45) Publication of the grant of the patent:
**09.09.92 Bulletin 92/37**

(84) Designated Contracting States:
**DE FR GB IT NL**

(56) References cited:
**FR-A- 2 499 801**

**JEE JOURNAL OF ELECTRONIC ENGINEER-
ING, vol. 18, no. 177, September 1981, pages
55-59, Tokyo, JP; M. TAMURA:
"Developmental pace picking up for VFDs
for TV video image"**

**IEEE TRANSACTIONS ON ELECTRON DE-
VICES, vol. ED-26, no. 9, September 1979,
pages 1354-1358, IEEE; L.B. JOHNSTON:
"Feedback multiplier flat-panel television: IV
- Anode sensing"**

(73) Proprietor: **SONY CORPORATION
7-35 Kitashinagawa 6-chome Shinagawa-ku
Tokyo 141(JP)**

(72) Inventor: **Shimada, Satoshi c/o Patent Divi-
sion
Sony Corporation 7-35 Kitashinagawa-6
Shinagawa-ku Tokyo(JP)**
Inventor: **Watanabe, Yuji c/o Patent Division
Sony Corporation 7-35 Kitashinagawa-6
Shinagawa-ku Tokyo(JP)**

(74) Representative: **Thomas, Christopher Hugo et
al
D Young & Co 10 Staple Inn
London WC1V 7RD(GB)**

## Description

This invention relates to video display apparatus comprising a display device including a plurality of display cells arranged in an X-Y matrix.

A video display device such as the Sony Jumbotron in which display cells are arranged in a 2-dimensional X-Y matrix form and the display cells are respectively driven by desired data to display a desired picture is known.

We have proposed as a display cell usable in such a video display device the following.

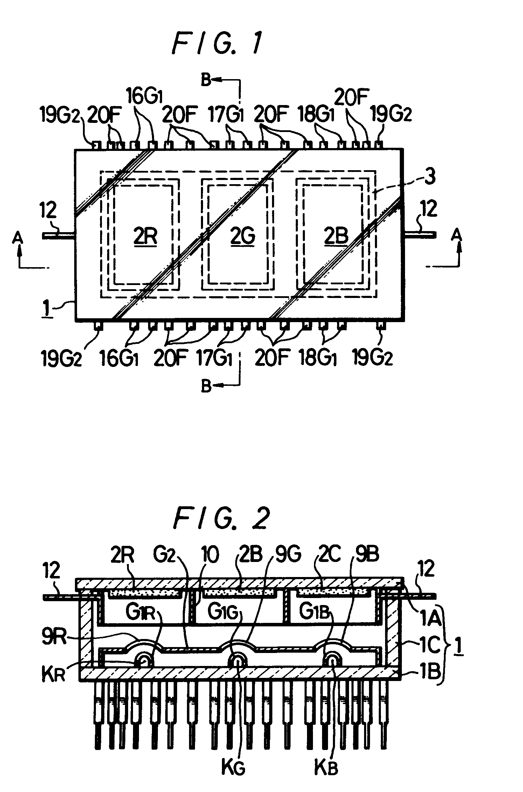

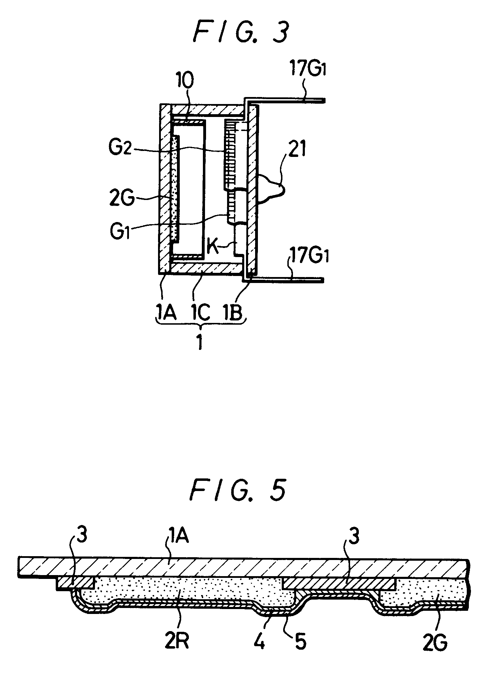

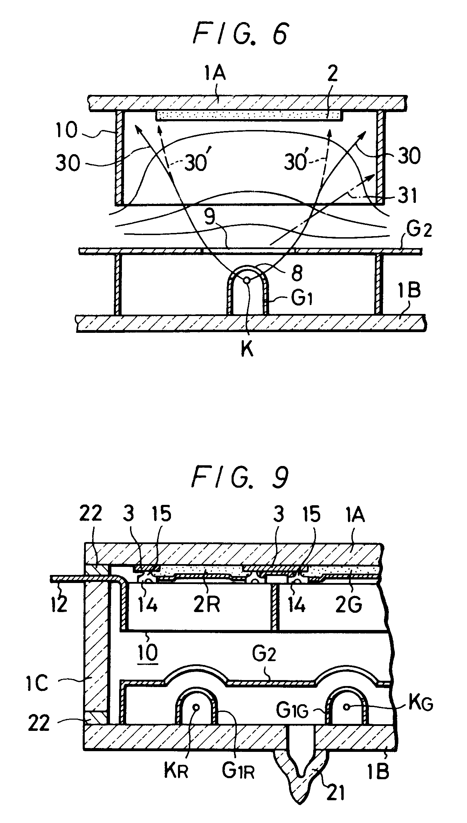

Referring to Figures 1 to 4 of the accompanying drawings, these show a front view of a luminescent display cell, a sectional view taken on line A-A of Figure 1, a sectional view taken on line B-B of Figure 1 and a partially cut-away perspective view of the cell. The cell comprises a glass envelope 1 comprising a front panel 1A, a rear plate 1B and a side wall 1C. Within the glass envelope 1 are disposed a plurality of luminescent display segments 2 (2R, 2G, 2B), a plurality of cathodes K ($K_R$, $K_G$, $K_B$) and first grids $G_1$ ($G_{1R}$, $G_{1G}$, $G_{1B}$) in corresponding relation to each display segment 2, and a common second grid (accelerating electrode) $G_2$. The display segments 2 each comprise a phosphor layer formed on the inner surface of the front panel 1A. There are three display segments 2R; 2G and 2B for red, green and blue luminescence, respectively. More particularly, as shown in Figure 5 of the accompanying drawings, a carbon layer 3 forming a conductive layer is printed in the form of a frame on the inner surface of the front panel 1A. In spaces in the frame, red, green and blue phosphor layers respectively forming the display segments 2R, 2G and 2B are formed by printing so as to overlap the carbon layer 3. Overlying the surfaces of these phosphor layers a metal back layer 5 is formed, for example an aluminium layer, over a filming layer 4. In opposed relation to the display segments 2R, 2G and 2B comprising the above phosphor layers and inside the rear panel 1B are positioned wire cathodes K($K_R$, $K_G$ and $K_B$), first grids $G_{1R}$, $G_{1G}$ and $G_{1B}$ opposite respective wire cathodes K, and the second grid $G_2$ in common to the three first grids $G_{1R}$, $G_{1G}$ and $G_{1B}$. Each wire cathode K is formed, for example, by coating the surface of a tungsten heater with carbonate as an electron emissive material.

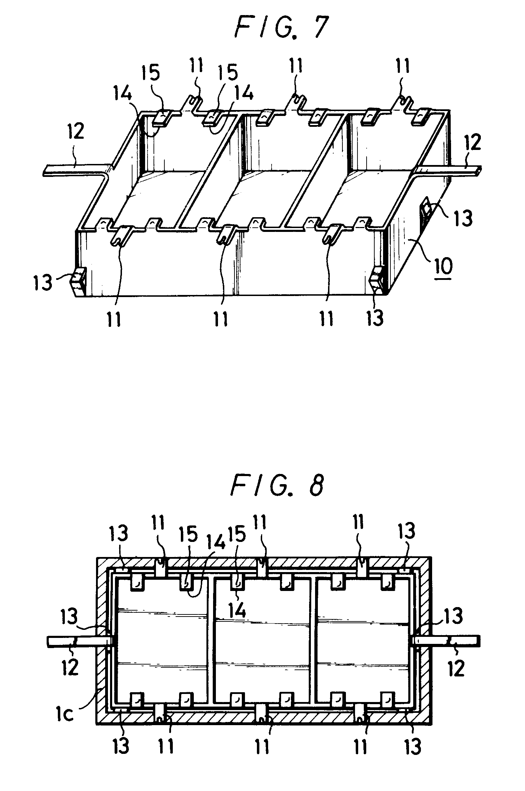

The wire cathodes K are each stretched between a pair of conductive support members 6 and 7 which are disposed on respective side portions of the rear panel 1B. One support member 6 is for fixing one end of each wire cathode K, while the other support member 7 is provided with a spring portion 7a to which is fixed the other end of each wire cathode K. With this arrangement, an even extension of the wire cathode K due to a rise of temperature would be absorbed by the spring portion 7a, and thus the wire cathode K never becomes loose. The first grids $G_{1R}$, $G_{1G}$ and $G_{1B}$ are formed in a half-cylindrical shape having a cylindrical surface in corresponding relation to the wire cathodes K, and a plurality of slits 8 are formed in the cylindrical surface at a predetermined pitch along the longitudinal direction of the same surface. The slits 8 are for the transmission therethrough of electrons radiated from the wire cathode K. The second grid $G_2$ is formed with slits 9 in portions corresponding to the first grids $G_{1R}$, $G_{1G}$ and $G_{1B}$, and in positions corresponding to the slits 8 of the first grids $G_{1R}$, $G_{1G}$ and $G_{1B}$. In this case, slit portions 9R, 9G and 9B of the second grid $G_2$ may be formed so as to have cylindrical surfaces concentric with the corresponding first grids $G_{1R}$, $G_{1G}$ and $G_{1B}$. In this construction, electron beams from the wire cathodes K are radiated rectilinearly through the slits 8 and 9 of the first and second grids $G_1$ and $G_2$ and are spread with respect to the longitudinal direction of the slits 8 and 9. On the other hand, the portions of the second grid $G_2$ in which are formed the slits 9 may be horizontal as shown in Figure 6 of the accompanying drawings. In this case, the electron beam is radiated so that it passes through the second grid $G_2$ and then is curved somewhat inwardly with respect to the longitudinal direction of the slits 8 and 9, as shown by a dotted line 30'.

On the other hand, a separator 10 formed of a conductive material is disposed to surround the display segments 2R, 2G and 2B. The separator 10 not only serves as a shield for preventing secondary electrons 31 (see Figure 6) induced by impingement of electron beams 30 from the wire cathodes K on the first or second grid $G_1$ or $G_2$ from rendering an adjacent display segment 2 luminous, but also serves to form a diffusion lens which functions to spread the electron beam 30 from each wire cathode K so that the electron beam 30 is radiated throughout the corresponding display segment 2. In addition, the separator 10 is used as power supply means for supplying a high voltage, for example 10 KV, to each display segment 2.

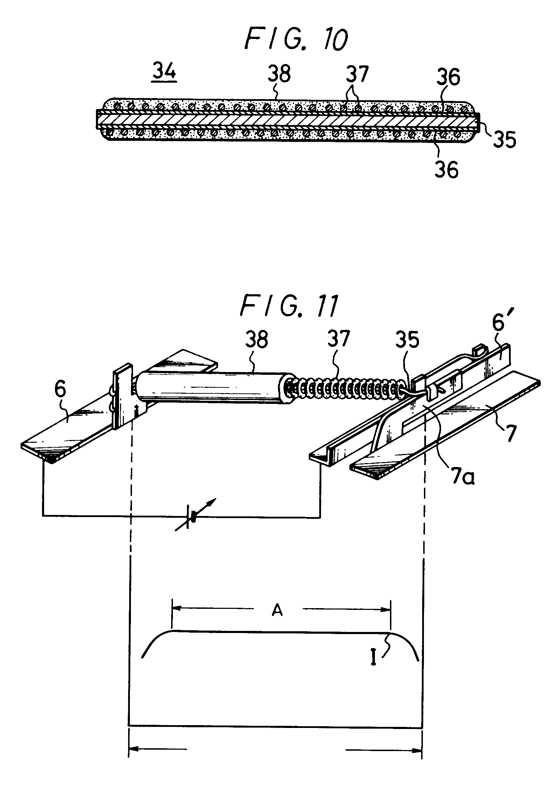

In assembling, the separator 10 is supported between the front panel 1A and a side wall 1C of the glass envelope 1 and fixed by frit. More specifically, as shown in Figure 7 of the accompanying drawings, the separator 10 is in the form of a frame partitioned in threes to surround the display segments 2, and on first opposed upper ends thereof are formed outwardly projecting supporting pieces 11, while on the other opposed upper ends are formed anode leads 12 for the supply of high voltage (anode voltage). Furthermore, on the side portions of the separator 10 are formed outwardly bent resilient positioning pieces 13. When the separator 10 is inserted from above into the inside of the side wall 1C, as shown in Figure 8 of the accompanying drawings, the supporting pieces 11 abut the upper end face of the side wall 1C thereby to support the separator 10, and at the same time the bent portions 13 abut the inner surface of the side wall 1C thereby to position the separator 10 in central fashion.

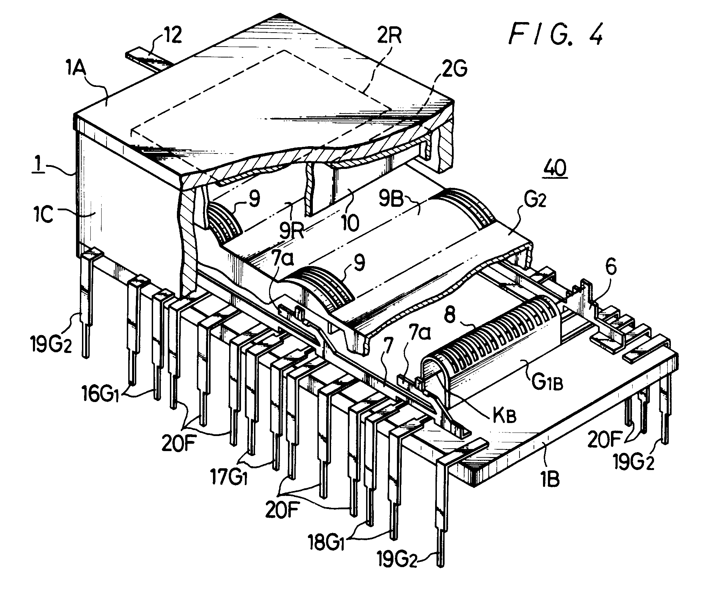

Also provided on the upper end portion of the separator 10 are inwardly bent lugs 14 each having a projection 15 formed on the surface thereof. When the front panel 1A is placed and sealed on the side wall 1C after enclosing the separator 10 in the side wall 1C, the projections 15 contact the carbon layer 3 or the metal back layer 5 (see Figure 9 of the accompanying drawings). As a result, the high voltage from the anode leads 12 is fed in common to the display segments 2R, 2G and 2B. In an assembled state, the anode leads 12 to which are applied the high voltage are taken out to the exterior through the sealed portion between the front panel 1A and the upper end face of the side wall 1C, while the leads of the wire cathodes K, the first grid $G_1$ and the second grid $G_2$ are taken out to the exterior through a sealed portion between the rear plate 1B and the side wall 1C. The leads of the cathodes K, the first grids $G_1$ and the second grid $G_2$ are brought out together for supporting purposes. For example, in each of the first grids $G_{1R}$, $G_{1G}$ and $G_{1B}$, two leads on each side, namely, a total of four leads on both sides, are brought out as leads $16G_1$, $17G_1$, and $18G_1$ - (see Figure 4). In the case of the second grid $G_2$, four leads $19G_2$ are brought out corresponding to the four corners of the rear panel. Leads 20F of the wire cathodes K are brought out together to the right and left from both support members 6 and 7. The leads, 20F of the wire cathodes K are connected in common for each of the support members 6 and 7. Also with respect to each of the first and second grids $G_1$ and $G_2$, the corresponding leads are connected in common.

The glass envelope 1 is provided by sealing the front panel 1A, the side wall 1C and the rear plate 1B with respect to each other by frits 22 (see Figure 9). To the rear plate 1B a chip-off pipe 21 for gas exhaust is fixed by frits.

Operation of the above display device will now be explained. An anode voltage of, say, 10 KV or so is supplied through the anode leads 12 to the red, green and blue display segments 2R, 2G and 2B. To each of the first grids $G_{1R}$, $G_{1G}$ and $G_{1B}$ is applied a voltage of, say, 0 to 30V, while to the second grid $G_2$ is applied a voltage of, say, 300V. The wire cathodes $K_R$, $K_G$ and $K_B$ are of 60 to 70 mW or so each. In this construction, the anode side and the second grid $G_2$ are fixed in voltage, while the voltage applied to the first grids $G_1$ is changed to turn on and off the display segments 2 selectively. More particularly, when 0V is applied to a first grid $G_1$, an electron beam from the wire cathode K is cut off and the corresponding display segment 2 is not rendered luminous. When, say, 30V is applied to a first grid $G_1$, an electron beam 30 from the wire cathode K passes through the first grid $G_1$, is then accelerated by the second grid $G_2$ and impinges upon the phosphor of the corresponding display segment 2 to make it luminous. At this time, the luminance is controlled by controlling the pulse width (duration) of the voltage (30V) applied to the first grid $G_1$. Further, as shown in Figure 6, the electron beam 30 from the wire cathode K is spread by the separator 10 and radiated to the entire surface of the display segment 2. When the electron beam 30 from the wire cathode K impinges upon the first and second grids, $G_1$ and $G_2$ there are produced the secondary electrons 31 from the grids, $G_1$ and $G_2$ but the secondary electrons 31 are obstructed by the separator 10, so they do not impinge upon the adjacent display segment 2. In this way, by selectively controlling the voltage applied to the first grids, $G_1$ the display segments 2R, 2G and 2B are selectively rendered luminous at a high luminance.

Such a luminescent display device can be made thin. Moreover, the low voltage-side leads such as the cathode and first and second grid leads are taken out from the rear plate 1B side of the glass envelope 1, while the high voltage-side anode leads 12 are taken out from the front panel 1A side. Therefore, possible dangers during discharge and wiring can be avoided, thus ensuring a stable luminescent display.

Moreover, since the anode voltage-applied separator 10 surrounds each display segment 2, a diffusion lens is formed by the separator 10. Therefore, even if only the first grids $G_1$ are curved and the second grid $G_2$ is flat (as shown in Figure 6), the electron beam 30 from the wire cathode K spreads laterally (in the direction of the slits 8 and 9) and is radiated to the entire surface of the display segment 2. At the same time, the secondary electrons 31 from the first or second grid $G_1$ and $G_2$ are obstructed by the separator 10, so the adjacent cut-off display segment 2 is not rendered luminous.

In the case of a colour display (for example, in the case of a 9300°K white picture), the luminance mixing ratio is about 7% blue, about 13% red, and about 80% green. In the case where wire cathodes are used as an electron emission source, they are in many cases used with a temperature restriction in order to prolong their service life. The problem of making the luminance of the green cathode higher than that of the other cathodes can be solved by increasing the number of green cathodes used. For example, two green cathodes $K_G$, one red cathode $K_R$, and one blue cathode $K_B$ may be used. As a result, the total number of electrons for green becomes larger than that for red and blue, thus making it possible to effect a colour display. There may also be a plurality of red and blue cathodes, which would prolong their service life. Thus, by increasing the number of green cathodes in comparison with the other cathodes, the luminance of green can be enhanced and a good white balance is obtainable. Consequently, an excessive load is not imposed on the cathodes, that is, the life of the luminescent display device can be prolonged. Actually, two green cathodes are disposed in spaced relation at a distance of about 0.8 to 1 mm. As to the number of electrons emitted, an increase of 70 to 80% can be expected; it does not become twice as large as that in the case of a single green cathode due to the electron scattering effect. Alternatively, the green luminance may be enhanced by making the area of the green phosphor layer larger than that of the red and blue phosphor layers.

Since the wire cathodes are used with a temperature restriction, that is, the loading of the oxide cathode is set at a ratio of one to several tens to prevent a reddish appearance, the number of electrons emitted per cathode is small. One method of solving this problem might be substantially to enlarge the surface area of oxide by winding a tungsten wire spirally, for example. But, in the case of a long spiral, it is likely that there will occur loosening or vibration of the cathode. In view of this, a construction as shown in Figures 10 and 11 of the accompanying drawings has been proposed.

In this example, a core 35 formed of a high-temperature material such as, for example, tungsten or molybdenum, is provided, and its surface is coated with an insulating material 36 such $Al_2O_3$. Then tungsten wire 37 serving as a heater is wound spirally thereon and an electron emissive material 38, for example carbonate, is bonded to the spiral portion by spraying or electrodeposition to form a directly heated cathode 34. The core 35 is fixed at one end thereof to one support member 6 and at the other end thereof to the spring portion 7a of the other support member 7 by spot welding or other suitable means, it being stretched under tension. The tungsten wire 37 is fixed between one support member 6 and a second support member 6' on the other side by spot welding or other suitable means.

Thus, in the above construction, the cathode is wound spirally onto the core 35 coated with the insulating material 36, and the core 35 is stretched by the spring portion 7a, whereby problems such as shorting between spiral portions and thermal deformation of the spiral can be eliminated. Moreover, the oxide surface area is substantially increased, and a uniform temperature distribution area (A) with reduced temperature difference between the ends and the centre of the cathode becomes wider. As a result, the number of electrons emitted can be increased, and as a whole, therfore, it is possible to increase the amount of allowable current per cathode. The curve I in Figure 11 represents a temperature distribution.

Thus, the luminescent display device is formed. In this case, since the separator supplied with the same high voltage as that applied to the display segments is positioned to surround the plurality of display segments, a diffusion lens is formed whereby an electron beam from the cathode is spread laterally and radiated to the entire surface of each display segment or element. Consequently, it is possible to make a high luminance display. Moreover, by the presence of the separator, secondary electrodes from a control electrode or accelerating electrode are obstructed, not rendering the adjacent cut-off display segment luminous, and thus a stable luminescent display can be effected.

When a picture display apparatus is formed by using the above luminescent display devices, the following assembly method is used.

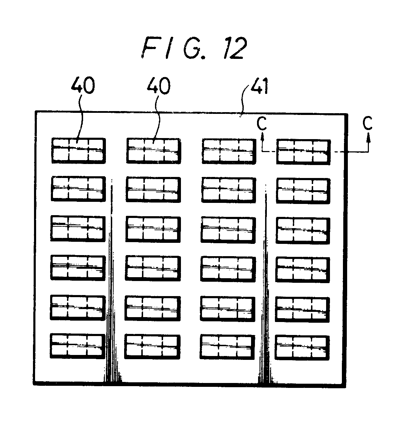

A plurality of the above luminescent display devices or cells 40, for example, 6 (column) x 4 (row) = 24 luminescent display cells 40 are incorporated in a unit case 41 to form one unit as shown in Figure 12 of the accompanying drawings.

Then, a plurality of the above unit cases 41 are arranged in an X-Y matrix form, for example, 7 (column) x 5 (row) = 35 to form a block and then five blocks are arranged laterally to form a sub-module. Then, a plurality of the sub-modules are combined in an X-Y matrix form, for example, 9 (column) x 4 (row) = 36. By using a plurality of the sub-modules, a jumbo-sized picture display apparatus of, for example, 25 m (column x 40 m (row) can be constructed. In this case, the number of the display cells 40 is

36 x 5 x 35 x 24 = 151,200

and the number of the display segments is three times the above number and hence about 450,000.

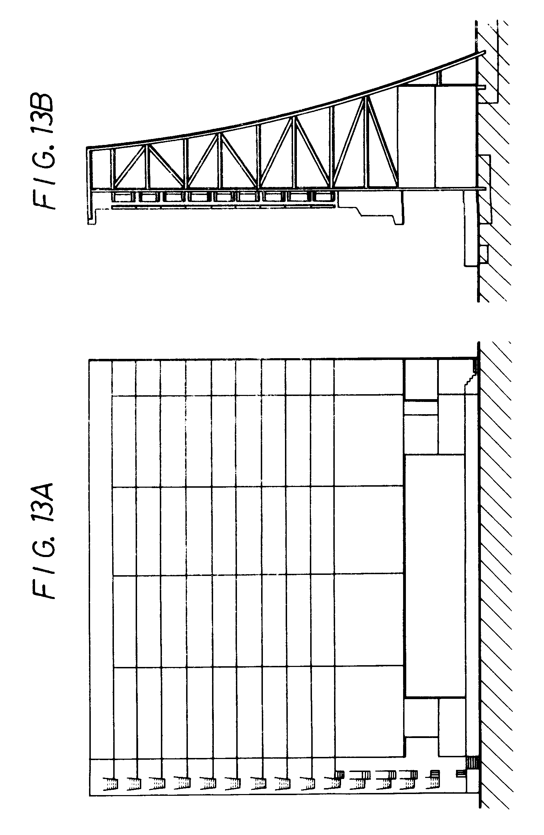

Figures 13A and 13B of the accompanying drawings are respectively a front view and a cross-sectional view of the whole of a built-up jumbo-sized picture display apparatus. The whole of this jumbo-sized picture display apparatus is a building which is, for example, 42 m in height and 47 m in width. The upper portion of the building is made as a display portion which is provided with nine floors, each floor having a height of 2.688 m. On each floor there are located four sub-modules in the lateral direction. Moreover, on the lower portion of the building there may, for example, be formed a stage for entertainments, an anteroom, and a central control room for operating and managing the display apparatus and the stage.

In this case, since twenty-four luminescent display cells 40 form a unit and a plurality of units are employed to assemble the whole picture display device, the display device becomes easy to handle and also easy to assemble. In this case, each unit is formed as a 40 cm square shape.

In such a picture display apparatus, when the display signal for each display cell 40 is transmitted, it is impossible to perform the signal transmission in parallel for about 450,000 picture display segments 2. Thus, the signal transmission is carried out by a scanning method. In this case, however, the structure of the display apparatus is of a unit utilization type, and if the known line-sequence scanning is employed, a large number of connections between the respective units in the lateral direction is required and the installation thereof becomes complicated.

Moreover, if the display apparatus is jumbo-sized as described above, and if the signal transmission is carried out in an analog fashion, errors such as cross-talk and time-base error are easily caused. Thus, it might be considered that the signal should be transmitted in the form of a digital signal However, if a flat cable is used as the transmission line, the transmission speed is generally restricted to about 300 kHz. On the other hand, the time available to send the signal to the whole picture screen is limited to 1/30 second.

Moreover, in the above display apparatus, the brightness characteristic of each display cell 40 tends to fluctuate. Generally, in a display cell of mass-production type, due to the distance between the cathode and the grid, variations in the deposition of carbonate which forms the electron emission substance, or secular variation in the carbonate, the electron emission characteristic of the cathode fluctuates and hence the brightness characteristic vary from one display cell to another. Accordingly, when a large number of the display cells are aligned to form a display screen, the brightness characteristics vary due to these fluctuations in the electron emission characteristics, so that the whole display becomes deteriorated in quality. Therefore, even if the control is such that a large number of the brightness steps are available, such brightness steps become non-effective.

While it might be considered that, for example, a variable resistor could be provided for each display cell for fine adjustment of the brightness thereof, when there are a very large number of display cells such adjustment becomes very difficult.

According to the present invention there is provided a video display apparatus comprising:

a display device including a plurality of luminescent display cells arranged in an X-Y matrix form, each of said display cells having a cathode, a grid and a luminescent target electrode;

a video signal source for supplying a video signal; and

driving means for supplying said video signal to each of said display cells to turn each of said display cells on and off in accordance with the level of said video signal whereby a picture is reproduced on said display device;

characterized in that:

said driving means comprises:

a voltage source for supplying a constant voltage;

an impedance element connected between said voltage source and the grid electrode of each display cell, the value of said impedance element being large relative to that of the equivalent impedance between said grid and said cathode of each display cell; and

switching means connected between said video signal source and said voltage source for supplying through said impedance element said constant voltage to the grid of each display cell which is turned on in response to the level of said video signal, whereby a constant current flows through the display cell.

The invention will now be described by way of example with reference to the accompanying drawings, throughout which like parts are referred to by like references, and in which:

Figure 1 is a front view of a luminescent display cell used in embodiments of the present invention;

Figure 2 is a sectional view taken on line A-A of Figure 1;

Figure 3 is a sectional view taken on line B-B of Figure 1;

Figure 4 is a partially cut-away perspective view of the luminescent display cell in Figure 1;

Figure 5 is an enlarged sectional view of a display segment;

Figure 6 is a sectional view illustrative of the operation of a separator;

Figure 7 is a perspective view of the separator;

Figure 8 is a plan, view in which the separator is disposed within a side of an envelope;

Figure 9 is a sectional view of display segments and a separator;

Figure 10 is a sectional view showing another example of a wire cathode;

Figure 11 is a perspective view showing the mounting of the cathode of Figure 10;

Figure 12 is a front view of a single unit incorporating a plurality of display cells;

Figures 13A and 13B are respectively a front view and a cross-sectional view of a built-up jumbo-sized display apparatus;

Figure 14 is,a block diagram showing an embodiment of video display apparatus according to the present invention;

Figure 15 is a diagram used in explaining the operation of the embodiment;

Figures 16A and 16B are waveform diagrams used in explaining the embodiment;

Figures 17 and 18 are schematic diagrams showing a signal supplying system; and

Figure 19 is a circuit diagram showing an example of a drive circuit for driving a luminescent display cell in the embodiment.

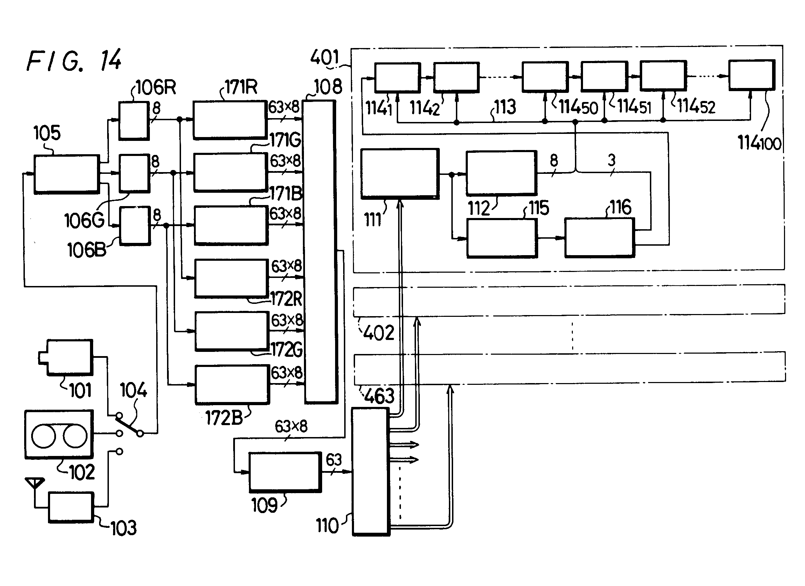

Figure 14 is a block diagram showing an embodiment of the video display apparatus according to the present invention. In this embodiment the video signals from a television camera 101, a video tape recorder (VTR) 102, or a tuner 103 selected by an input change-over switch 104. These video signals are each a composite video signal of, for example, the NTSC system. The video signal selected by the switch 104 is supplied to a decoder 105 in which it is decoded to three colour component signals of red, green and blue. these three colour component signals are respectively supplied to analog to digital (A/D) converters 106R, 106G and 106B and converted to 8-bit parallel digital signals, respectively.

These digital signals are supplied alternately to memories 171 (171R, 171G, 171B) and memories 172 (172R, 172G, 172B) each of which has one field capacity. The memories 171 and 172 each form a scanning converter which provides four horizontal lines from five horizontal lines. Further, for 189 horizontal lines, for example, selected from each field of the scanning converted signal, there are derived one output at every three horizontal lines, totally 63 ( x 8 bit parallel) outputs.

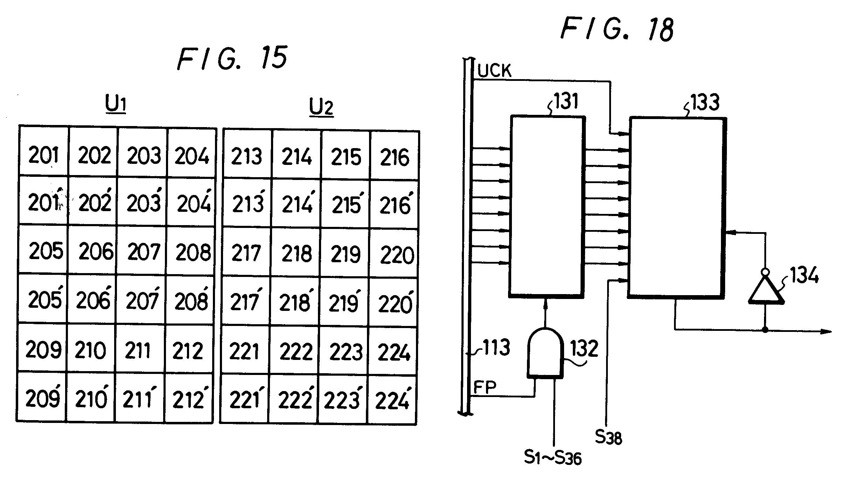

The order of deriving the signal from the scanning converter is a specific one, such that after the supply of the signal to one of the units described previously has been completed, the supply of the signal to the next adjacent unit will be done. That is, as shown in Figure 15, when there are two adjacent units $U_1$ and $U_2$, in one field the digital data for a segment corresponding to each cell is sequentially derived from one memory in the numbered order, and after the segment data corresponding to three horizontal lines comprising cells 201 to 204, 205 to 208 and 209 to 212 in the left unit $U_1$ have been completely derived, the segment data corresponding to three horizontal ines of cells 213 to 216, 217 to 220 and 221 to 224 in the right unit $U_2$ are derived. Then, the derivation of the segment data is shifted to the right side unit successively. The segment data corresponding to the horizontal lines of cells marked by the corresponding numbers with a dash in Figure 15 are derived from the other memory in the next field by interlace scanning.

These segment data are derived at the same time from the respective memory 171 or 172, respectively. This data deriving is carried out such that 63 data at every three lines are simultaneously derived. The data thus derived are supplied to a data selector 108 in which at every field the red, green and blue data are dot-sequentially selected from the memory in which no writing is carried out thereby to form the data signal of 63 (x 8 bit parallel). The data signals so formed are fed to a multiplexer 109 in which 8-bit parallel signals are respectively converted to serial data signals. The signals thus converted are supplied to an optical converter 110 and converted thereby to the corresponding optical signal.

The optical signals of 63 data at every three horizontal lines are transmitted through optical-fibre cables 301, 302, ... 363 to centre portions of lateral groups 401, 402, ... 463 respectively where each group represents the total units of the display apparatus arranged laterally.

Then, for example, in the uppermost group 401 of the units, the optical signal from the optical-fibre cable 301 is fed to a photo-electric converter 111 and converted thereby to the corresponding electrical signal. This converted data signal is supplied to a demultiplexer 112 in which the serial data signal is converted to the 8-bit parallel signal. This parallel data signal is supplied at the same time through a bus line 113 to, for example, 100 units $114_1$, $114_2$, ... $114_{100}$, which are laterally arranged, in parallel.

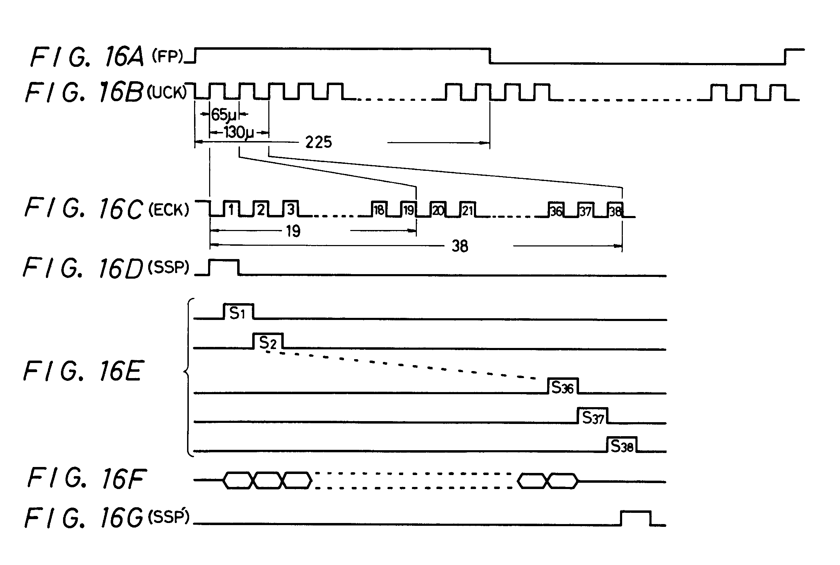

The signal from the photo-electric converter 111 is further supplied to a sync separator 115 in which synchronizing signals are formed by a predetermined pattern generator. The synchronizing signals therefrom are fed to a timing generator circuit 116 in which there are respectively generated a frame pulse signal FP which is inverted at every field as shown in Figure 16A, a unit clock signal (UCK) which has 255 cycles during a half period (one field) of the frame pulse signal as shown in Figure 16B, an element clock signal ECK which contains 38 cycles during two cycles of the unit clock signal UCK as shown in Figure 16C, and a start pulse SSP which is formed by one element clock signal amount at every inversion of the frame pulse signal as shown in Figure 16D. The frame pulse signal FD, unit clock signal UCK and element clock signal ECK are supplied together with the above data signal through the bus line 113 to the respective units $114_1$, $114_2$, ... $114_{100}$ in parallel while the start pulse is supplied to the first unit $114_1$.

Operation similar to the above is carried out in each of the 63 groups 401, 402, ... 463.

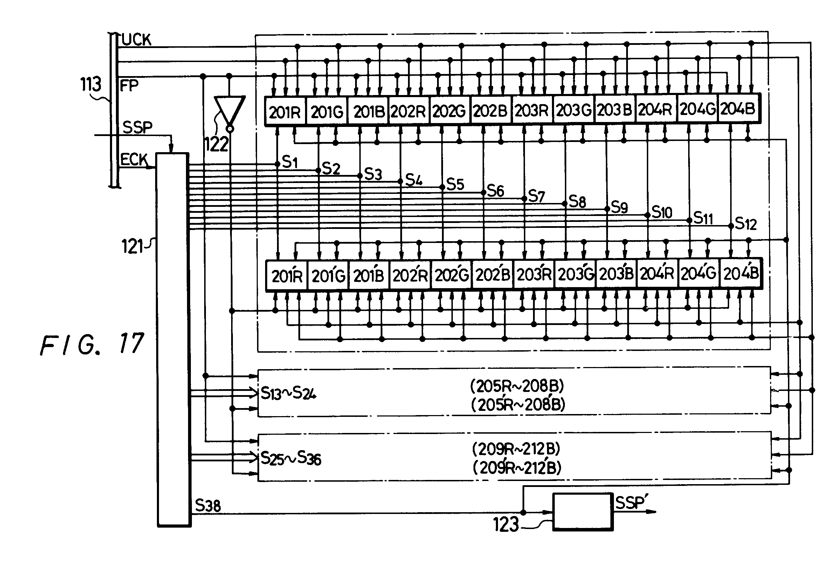

In each of the units above, the signal translating circuit is formed as shown in Figure 17 and comprises a shift register 121 having 38 stages. In this case, the element clock signal ECK from the timing generator circuit 116 through the bus line 113 is supplied to the clock input terminal of the shift register 121 and the start pulse SSP is supplied to its data input terminal. Then, from the respective stages of the shift register 121 there are delivered sequentially shifted signals $S_1$, $S_2$, ... $S_{38}$ as shown in Figure 16E. The signals $S_1$ to $S_{36}$ are respectively supplied to the display segments or elements 201R, 201G, 201B, 202R, 202G, 202B, ... 212R, 212G, 212B of each of the cells 201 to 212 and to elements 201'R , 201'G, 201'B, 202'R, 202'G, 202'B, ... 212'R, 212'G, 212'B of each of the cells 201' to 212'. In Figure 17, the circuits in one-dot chain line block are equivalent with one another.

The data signals, as shown in Figure 16F, from the bus line 113 are supplied to all the elements 201R to 212'B in parallel. The frame pulse signal FP is supplied to the elements 201R to 212B and to the elements 201'R to 212'B after being reversed in phase by an inverter 122.

The signal $S_{38}$ from the shift register 121 is supplied to a D-type flip-flop 123 which then produces a start pulse signal SSP' to be supplied to the next adjacent unit as shown in Figure 16G.

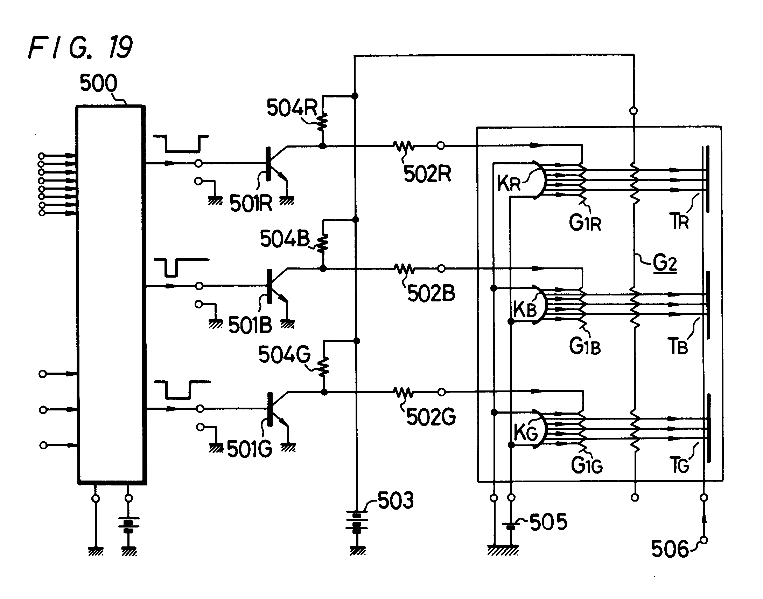

The signal circuit which will drive each element is constructed as shown in Figure 18 and comprises an 8-bit latch circuit 131 which is supplied at its data input terminals with the data signal from the bus line 113. An AND circuit 132 is provided which is supplied with the frame pulse signal FP or its inverted signal and one of the signals $S_1$ to $S_{36}$. The output from the AND circuit 132 is supplied to the control terminal of the latch circuit 131. An 8-bit down counter 133 is provided which is supplied at its preset terminals with the output from the latch circuit 131, at its load terminal with the load pulse (signal $S_{38}$) from the shift register 121 and at its clock input terminal with the unit clock signal UCK from the bus line 113, respectively. When the counter 133 is in a condition other than the all-zero condition, it produces an output signal which is supplied to the first grid $G_1$ of each element mentioned above. The output signal of the counter 133 is phase-inverted by an inverter 134 and then supplied to the count-stop terminal of the counter 133.

Accordingly, in each element of each unit, at the times of the signals $S_1$ to $S_{36}$, the data from the bus line 113 are latched in the latching circuit 131 of the corresponding element and then held therein. The data held therein are preset to the counter 133 at the time of the signal $S_{38}$. The preset data are then counted down until the counter 133 reaches the all-zero condition, so that at the output terminal of the counter 133 there is developed the pulse width modulated signals in accordance with each data signal. In this case, the counter 133 counts down the preset data in response to the unit clock signal UCK. Since this unit clock signal has 25 cycles during one field period, when the data has the largest value, a display element is displayed during one field period continuously, while when the data has the smallest value, the display element is not displayed so that the display therebetween can be divided into 256 brightness steps. The first grid $G_1$ of each element can be driven by the pulse width modulated signal.

Moreover, at the time of the signal $S_{38}$ the start pulse signal for the next adjacent unit is produced. Thereafter, an operation similar to the above operation is sequentially carried out for 100 units arranged laterally. Moreover, the data latching operation of each unit is performed during the 2-cycle period of the unit clock signal UCK so that such operation for 100 unit arranged laterally is completed in 200 cycles. Therefore, by utilizing the remaining 55 cycles, special control signals such as the synchronizing signal and so on can be transmitted.

Since in the next field the frame pulse signal FP is inverted in phase, a similar operation is carried out for the other picture elements of the interlace scanning. At this time, the preset pulse is supplied to the picture elements which were driven in the previous field, so that the same display is performed twice on each picture element during the successive 2 field intervals.

Thus, the displays are performed on 100 units which are arranged laterally. Further, such display is performed for the 63 vertical direction groups of units in paralle at the same time, whereby a whole picture is displayed.

Moreover, in the above display apparatus, a drive circuit which drives each luminescent display cell 40 is constructed as shown in Figure 19. In Figure 19, the red, green and blue pulse width modulated signals from the pulse width modulated signal forming circuit 500 are respectively supplied to bases of switching transistors 501R, 501G and 501B. The emitters of the transistors 501R, 501G and 501B are respectively grounded and the collectors thereof are respectively connected through resistors 502R, 502G and 502B of high resistive value, for example, 100 kilohms to the first grids $G_{1R}$, $G_{1G}$ and $G_{1B}$ of each picture element. A power source 503 of, for example, 50V that is connected to the second grid $G_2$ is connected through resistors 504R, 504G and 504B of high resistive value, for example, 100 kilohms to the collectors of the transistors 501R, 501G and 501B.

Furthermore, the cathodes $K_R$, $K_G$ and $K_B$ are heated by a voltage source 505 to 1.4 V and the electron beams thus emitted impinge through the first grids $G_{1R}$, $G_{1G}$ and $G_{1B}$ and the second grid $G_2$ on the phosphor targets (anodes) $T_R$, $T_G$ and $T_B$ to which a voltage from a high voltage terminal 506 of, for example, 10 kV is applied, and hence the phosphors are energized. At the same time, the pulse width modulated signals are supplied to the transistors 501R, 501G and 501B so that when the transistors 501R, 501G and 501B are turned on, and hence the voltages at the first grids $G_{1R}$, $G_{1G}$ and $G_{1B}$ become zero volts, the electron emissions from the cathodes $K_R$, $K_G$ and $K_B$ are cut off, while when the transistors 501R, 501G and 501B are turned off and the voltages of the first grids $G_{1R}$, $G_{1G}$ and $G_{1B}$ become more than, for example, 3 V, the electron beams impinge on the targets $T_R$, $T_G$ and $T_B$. Thus the brightness control is carried out by the pulse width modulated signals.

In this circuit, since the voltage from the voltage source 503 of 50 V is supplied through the resistors 504R and 502R; 504G and 502G; and 504B and 502B of high resistive value to the first grids $G_{1R}$, $G_{1G}$ and $G_{1B}$, the respective grid currents $I_{GR}$, $I_{GG}$ and $I_{GB}$ become constant currents.

In this case, the cathode current Ik which is proportional to the electron emission, the target current IT which is proportional to the brightness and the grid current IG satisfy the relation:

$$Ik = IG + IT$$

On the other hand, if an open area factor of the grid is taken as $\eta$, the cathode current Ik and the grid current IG satisfy the relation:

$$IG = (1 - \eta)Ik$$

Modifying the above equations yields:

$$IT = \frac{\eta}{1 - \eta} IG$$

Thus, the target current relating to the brightness is a value which is proportional to the grid current.

Accordingly, in the above circuit, when the grid currents $I_{GR}$, $I_{GG}$ and $I_{GB}$ become constant currents, the target current becomes constant and hence the brightness is made constant.

In other words, since the resistive values of the resistors 504R and 502R; 504G and 502G; and 504B and 502B are selected so as to become sufficiently large relative to the equivalent impedance when the cathodes $K_R$, $K_G$ and $K_B$ are seen from the frist grids $G_{1R}$, $G_{1G}$ and $G_{1B}$, the extra electrons caused by variations in the cathode emission characteristics are absorbed by the first grids $G_{1R}$, $G_{1G}$ and $G_{1B}$, so that the target current which reaches the phosphor becomes constant.

If one of each pair of the resistors 504R and 502R; 504G and 502G; and 504B and 502B only is provided with the resistive value of 200 kilohms, the same constant current effect can be achieved. However, when only the resistors 502R, 502G and 502B are 200 kilohms in resistive value, the voltage of 50 V is directly supplied to the transistors 501R, 501G and 501B, so that it is necessary to increase the breakdown voltage of the transistors 501R, 501G and 501B. While, when only the resistors 504R, 504G and 504B are 200 kilohms in resistive value, there is a risk that the transistors 501R, 501G and 501B may be destroyed by the discharge from the display screen side. In order to protect the transistors 501R, 501G and 501B from such destruction, it is preferred that a pair of resistors are used as the example mentioned above.

Furthermore, there is a risk that the constant current will fluctuate due to variations in the resistors 502R and 504R; 502G and 504G; and 502B and 504B. However, this will cause no substantial problem if a resistor having an error of within about 5% is used. Such resistors are easily available on the market.

Thus, a jumbo-sized picture of, for example, 25 m (column) x 40 m (row) is displayed. With the above picture display apparatus, since the data are sequentially transmitted at every unit and after the data transmission of one display unit is completed, the data of the next adjacent display unit is transmitted, the display operation is completed at each unit. As a result, the wiring between the respective units only requires one line to transmit the start pulse SSP' from one unit to the next unit, so that the connections become quite simple. The supply of the data signal and so on from the bus line to each unit can be performed by using a multi-contact connector.

Therefore, when the units are attached or exchanged, the work becomes simple and the assembling and repairing thereof become quite easy. For example, if one unit becomes out of order, it is sufficient that the unit is exchanged for a new good unit. Upon this exchange, since the number of lines for electrical connection is small, the exchange can be done rapidly and easily. Moreover, risk of trouble caused, for example, by a contact miss can be reduced.

Moreover, as an emergency measure, it is sufficient that a counter which can count up to 38 is connected between the input and output terminals for the start pulse of an inoperative unit and then this inoperative unit is removed. In this case, there is no adverse effect on the other units: Furthermore, when the operation of a certain unit is to be checked, since the signal is completed within the unit, the check is very easy.

Also, since the data is transmitted in parallel to every laterally arranged unit, the transmission speed is made low. That is, the data transmission speed in the above embodiment becomes as follows:

$$60 \times 255 \times \frac{38}{2} = 290.7 \text{ (kHz)}$$

This speed is lower than the tolerable range (300kHz) of a flat cable (bus line), so that a conventional flat cable can be used.

Further, the data transmission is such that the data of 2-field amounts of the interlace scanning are transmitted in one frame interval and the data is rewritten only once in each picture element at one frame interval. However, the display is repated in two sequential fields and the display frequency is 60 Hz, so that the generation of flicker can be suppressed.

Moreover, in the above display apparatus, the first grid current is made a constant current, so that fluctuation of the brightness characteristics on the phosphor screen can be prevented. As a result, the brightness on the display screen can be prevented from becoming irregular and, when the display apparatus is formed as a colour display apparatus, irregularities in the colour are avoided. Since the brightness does not fluctuate, brightness adjustment is not necessary. Accordingly, the adjustment of the whole of the display apparatus can be simplified, and installation of the display apparatus is also made easy.

Furthermore, it becomes unnecessary to provide the cut-off adjustment variable resistors, and since the constant current driving is carried out forcibly, it is free from the influence due to secular variation of the electron emission.

## Claims

1. A video display apparatus comprising:
    a display device including a plurality of luminescent display cells (201 to 224, etc) arranged in an X-Y matrix form, each of said display cells (201 to 224, etc) having a cathode (K), a grid ($G_1$) and a luminescent target electrode ($T_R$, $T_G$, $T_B$);
    a video signal source (101 to 106, 500) for supplying a video signal; and
    driving means (501 to 504) for supplying said video signal to each of said display cells (201 to 224, etc) to turn each of said display cells (201 to 224, etc) on and off in accordance with the level of said video signal whereby a picture is reproduced on said display device;

characterized in that:
    said driving means (501 to 504) comprises:
    a voltage source (503) for supplying a constant voltage;
    an impedance element (502, 504) connected between said voltage source (503) and the grid electrode ($G_1$) of each display cell (201 to 224, etc), the value of said impedance element (502, 504) being large relative to that of the equivalent impedance between said grid ($G_1$) and said cathode (K) of each display cell (201 to 224, etc); and
    switching means (501) connected between said video signal source (101 to 106, 500) and said voltage source (503) for supplying through said impedance element (502, 504) said constant voltage to the grid ($G_1$) of each display cell (201 to 224, etc) which is turned on in response to the level of said video signal, whereby a constant current flows through the display cell (201 to 224, etc).

2. A video display apparatus according to claim 1 wherein said impedance element (502, 504) includes a pair of series connected resistors 502, 504), and said switching means (501) includes a switching device (501) connected between a reference voltage terminal and a junction point between said pair of resistors (502, 504).

3. A video display apparatus according to claim 1 or claim 2 wherein said video signal source (101 to 106, 500) supplies a pulse width modulated video signal.

4. A video display apparatus according to claim 1, claim 2 or claim 3 wherein said impedance element (502, 504) is a resistor (502, 504) of a high resistive value.

## Patentansprüche

1. Videoanzeigegerät, das umfaßt:
    eine Anzeigeeinrichtung, die eine Vielzahl von lumineszierenden Anzeigezellen (201 bis 224, usw.) enthält, die in einer X-Y-Matrixform angeordnet sind, wobei jede Anzeigezelle (201 bis 224, usw.) eine Kathode (K), ein Gitter ($G_1$) und eine lumineszierende Fang-Elektrode ($T_R$, $T_G$, $T_B$) hat,
    eine Videosignalquelle (101 bis 106, 500) zum Zuführen eines Videosignals und
    ein Treibermittel (501 bis 504) zum Zuführen des Videosignals an jede der Anzeigezellen (201 bis 224, usw.), um jede der Anzeigezellen (201 bis 224, usw.) in Übereinstimmung mit dem Pegel des Videosignals ein- und auszuschalten, wodurch ein Bild auf der Anzeigeeinrichtung wiedergegeben wird,
**dadurch gekennzeichnet,** daß
das Treibermittel (501 bis 504) umfaßt:
eine Spannungsquelle (503) zum Abgeben einer konstanten Spannung,
ein Impedanz-Element (502, 504), das zwischen die Spannungsquelle (503) und die
Gitter-Elektrode ($G_1$) jeder Anzeigezelle (201
bis 224, usw.) geschaltet ist, wobei der Wert
des Impedanz-Elements (502, 504) groß relativ
zu demjenigen der äquivalenten Impedanz zwi-
schen dem Gitter ($G_1$) und der Kathode (K)
jeder Anzeigezelle (201 bis 224, usw.) ist, und
ein Schalt-Element (501), das zwischen die
Videosignalquelle (101 bis 106, 500) und die
Spannungsquelle (503) geschaltet ist zum Anlegen der konstanten Spannung durch das
Impedanz-Element (502, 504) an das Gitter
($G_1$) jeder Anzeigezelle (201 bis 224, usw.), die
in Reaktion auf den Pegel des Videosignals
eingeschaltet ist, wodurch ein konstanter Strom
durch die Anzeigezelle (201 bis 224, usw.)
fließt.

2.  Videoanzeigegerät nach Anspruch 1, bei dem
das Impedanz-Element (502, 504) ein Paar von
in Reihe geschalteten Widerständen (502, 504)
enthält und das Schalt-Element (501) eine
Schalteinrichtung (501) enthält, die zwischen
einen Referenzspannungsanschluß und einen
Verbindungspunkt zwischen dem Paar von Widerständen (502, 504) geschaltet ist.

3.  Videoanzeigegerät nach Anspruch 1 oder Anspruch 2, bei dem die Videosignalquelle (101
bis 106, 500) ein impulsbreitenmoduliertes Videosignal ausgibt.

4.  Videoanzeigegerät nach Anspruch 1, 2 oder 3,
bei dem das Impedanz-Element (502, 504) ein
Widerstand (502, 504) eines hohen Widerstandswerts ist.

## Revendications

1.  Un appareil de visualisation vidéo comprenant
:
un dispositif de visualisation comprenant
un ensemble de cellules de visualisation luminescentes (201 à 224, etc.) disposées sous la
forme d'une matrice X-Y, chacune de ces cellules (201 à 224, etc.) ayant une cathode (K),
une grille ($G_1$) et une électrode de cible luminescente ($T_R$, $T_G$, $T_B$);
une source de signal vidéo (101 à 106,
500) qui est destinée à fournir un signal vidéo;
et

des moyens d'attaque (501 à 504) qui sont
destinés à appliquer le signal vidéo à chacune
des cellules de visualisation (201 à 224, etc.),
pour éclairer et éteindre des cellules de visualisation (201 à 224, etc.), conformément au
niveau du signal vidéo, grâce à quoi une image est reproduite sur le dispositif de visualisation;
caractérisé en ce que :
les moyens d'attaque (501 à 504) comprennent :
une source de tension (503) qui est destinée à fournir une tension constante;
un élément à impédance (502, 504)
connecté entre la source de tension (503) et
l'électrode de grille ($G_1$) de chaque cellule de
visualisation (201 à 224, etc.), la valeur de cet
élément à impédance (502, 504) étant grande
par rapport à celle de l'impédance équivalente
entre la grille ($G_1$) et la cathode (K) de chaque
cellule de visualisation( 201 à 224, etc.); et
des moyens de commutation (501)
connectés entre la source de signal vidéo (101
à 106, 500) et la source de tension (503), pour
appliquer la tension constante, par l'intermédiaire de l'élément à impédance (502, 504) à
la grille ($G_1$) de chaque cellule de visualisation
(201 à 224, etc.) qui est éclairée, sous la
dépendance du niveau du signal vidéo, grâce
à quoi un courant constant circule dans la
cellule de visualisation (201 à 224, etc.).

2.  Un appareil de visualisation vidéo selon la revendication 1, dans lequel l'élément à impédance (502, 504) comprend une paire de résistances connectées en série (502, 504), et les
moyens de commutation (501) comprennent
un dispositif de commutation (501) qui est
connecté entre une borne de tension de référence et un point de connexion entre les résistances de la paire de résistances (502, 504).

3.  Un appareil de visualisation vidéo selon la revendication 1 ou la revendication 2, dans lequel la source de signal vidéo (101 à 106, 500)
fournit un signal vidéo modulé en largeur d'impulsion.

4.  Un appareil de visualisation vidéo selon la revendication 1, la revendication 2 ou la revendication 3, dans lequel l'élément à impédance
(502, 504) est une résistance (502, 504) ayant
une valeur élevée.

## F I G. 1

## F I G. 2

*F I G. 3*

*F I G. 5*

FIG. 4

FIG. 6

FIG. 9

FIG. 7

FIG. 8

*FIG. 10*

*FIG. 11*

## FIG. 12

F I G. 13B

F I G. 13A

F I G. 14

## FIG. 15

### U1

| 201 | 202 | 203 | 204 |
|-----|-----|-----|-----|
| 201' | 202' | 203' | 204' |
| 205 | 206 | 207 | 208 |
| 205' | 206' | 207' | 208' |
| 209 | 210 | 211 | 212 |
| 209' | 210' | 211' | 212' |

### U2

| 213 | 214 | 215 | 216 |
|-----|-----|-----|-----|
| 213' | 214' | 215' | 216' |
| 217 | 218 | 219 | 220 |
| 217' | 218' | 219' | 220' |
| 221 | 222 | 223 | 224 |
| 221' | 222' | 223' | 224' |

## FIG. 18

UCK

131

133

113

FP

132

134

S1~S36

S38

EP 0 153 053 B1

EP 0 153 053 B1

FIG. 16A (FP)

FIG. 16B (UCK)

65μ
130μ
225

FIG. 16C (ECK)

1  2  3  ...  18 19 20 21  ...  36 37 38

19
38

FIG. 16D (SSP)

FIG. 16E

S1
S2
S36
S37
S38

FIG. 16F

FIG. 16G (SSP')

FIG. 17

FIG. 19